# EUROPEAN PATENT SPECIFICATION

(11) **EP 0 897 665 B1**
(45) Date of publication and mention of the grant of the patent: **26.03.2003**
(21) Application number: 98115051.9
(22) Date of filing: 11.08.1998
(51) Int. Cl.: A01N 43/653

(54) **Fungicidal compositions**
Fungizide Zusammensetzungen
Compositions fongicides

(30) Priority: 21.08.1997 US 916110
(43) Date of publication of application: 24.02.1999
(73) Proprietor: Bayer Corporation, Pittsburgh, PA 15205-9741 (US)
(72) Inventor: Viets, Alan K., Excelsior Springs, MO 64024 (US); Cohoon, Stephen W., Excelsior Springs, MO 64024 (US)
(74) Representative: Schumacher, Günter, Dr.

(56) References cited:
- FR-A- 2 218 831
- FR-A- 2 636 503
- DATABASE WPI Derwent Publications Ltd., London, GB; AN 87-076340 XP002085120 SUMITOMO: "Agricultural fungicide compsn.- contains dialkylsulpho-succinate type surfactant and as active component (E)-1-(2,4-dichlorophenyl)-4,4-dimethyl-2- (1,2,4-triazole-1-yl)-1-pentene-3-ol" & JP 62 029503 A

## Description

The present invention relates to new fungicidal compositions and to their use for treating plants. Of particular interest is the known fungicide, α-(2-(4-chlorophenyl)ethyl)-α-(1,1-dimethylethyl)-1H-1,2,4-triazol-1-ethanol (also referred to herein as "tebuconazole"). See, for example, U.S. Patent 4, 723,984.

It is known to include certain surfactants in fungicide formulations to promote dispersion of the active ingredient in a liquid medium. Among the most commonly used surfactants in fungicide formulations are lignin sulfonates, sulfonated naphthalene and formaldehyde condensates. These surfactants are typically included in amounts of less than 5% by weight, based on the total weight of the formulation.

Other known surfactants are esters of sulfodicarboxylic acids and salts thereof (see, for example, U.S. Patents 2,176,426 and 2,028,091) and the commercially available alkali metal dialkyl sulfosuccinates from the Cytec business group of American Cyanamid (sold under the Aerosol trademark). These esters have extraordinary wetting power in various aqueous emulsions and suspensions.

It is already known from the FR-A 2 218 831 that dialkyl sulfosuccinates, such as sodium dioctyl sulfosuccinate, can be employed as additives for increasing the activity of fungicidal agents. The FR-A 2 636 503 specifically teaches the use of sodium dioctyl sulfosuccinate to improve the fungicidal properties of the known fungicide named bitertanol. Further, the JP-A 62-029 503 relates to suspension concentrates comprising (E)-1-(2,4-dichlorophenyl)-4,4-dimethyl-2-(1,2,4-triazol-1-yl)-1-penten-3-ol ( = diniconazole ) and sodium dioctyl sulfosuccinate. However, none of these references discloses compositions comprising tebuconazole as a fungicide and sodium dioctyl sulfosuccinate as an additive.

It is an object of the present invention to provide fungicidal compositions with improved efficacy. It is also an object of the present invention to provide a process for treating plants with fungicidal compositions containing less active ingredients without sacrificing their effectiveness in foliar treatment.

There have now been found fungicidal compositions in the form of suspensions comprising
a) from 20 to 30% by weight of α-(2-(4-chlorophenyl)-ethyl)-α-(1,1-dimethylethyl)-1H-1,2,4-triazol-1-ethanol,
b) from 10 to 40% by weight of an alkali metal sulfosuccinate of the formula 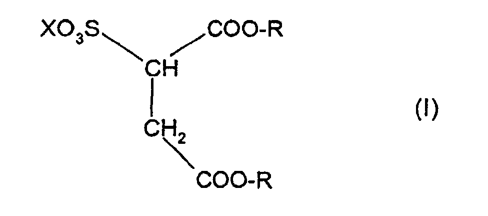 in which
   - R: is tridecyl, octyl, hexyl, amyl, isobutyl or cyclohexyl and
   - X: is a sodium atom,
c) from 15 to 45% by weight of an inert, liquid diluent,
d) from 8 to 12% by weight of a nonionic surfactant, and
e) from 0.5 to 1 % by weight of an anti-foam agent,
with said percents equalling 100%.

Further, it has been found that the compositions according to the invention can be used as fungicides in concentrate form. Preferably, however, the compositions are applied in diluted form as formulated suspensions which are then sprayed on the particular plants to be protected.

The active ingredient used in the compositions of the present invention is α-(2-(4-chlorophenyl)-ethyl)-α-(1,1-dimethylethyl)-1H-1,2,4-triazol-1-ethanol which is commonly called tebuconazole. Processes for making this active ingredient are known. See, for example, U.S. Patent 4,723,984.

The other critical component of the compositions of the present invention is an alkali metal sulfosuccinate of the formula (I).

Specific examples of suitable alkali metal sulfosuccinates include:
Sodium bis-tridecyl sulfosuccinate, sodium dioctyl sulfosuccinate, sodium dihexyl sulfosuccinate, sodium dicyclohexyl sulfosuccinate, sodium diamyl sulfosuccinate, sodium diisobutyl sulfosuccinate.

The alkali metal sulfosuccinates of the formula (I) are known and are described in U.S. Patents 2,028,091 and 2,176,423.

The inert, liquid diluents useful herein are known and used in the art and include aromatic hydrocarbons (such as benzene, xylene, toluene or alkyl naphthalenes), chlorinated aromatic or chlorinated aliphatic hydrocarbons (such as chlorobenzenes, chloroethylenes or methylene chloride), aliphatic or alicyclic hydrocarbons (such as, cyclohexane or parafins), alcohols (such as, methanol, butanol, ethylene glycol, propylene glycol or glycerine), ethers, ether-alcohols, ketones (such as, acetone, methylethyl ketone, methylisobutyl ketone or cyclohexanone ), strongly polar solvents (such as dimethylsulphoxide) and water. It is also possible to use mixtures of the above diluents. In the most preferred embodiment, a mixture of propylene glycol and water is used.

The nonionic surfactants useful herein are also known and used in the art. Specific examples of useful nonionic surfactants include polyethylene oxide ethers of fatty alcohols, alkyl arylpolyglycol ethers, ethoxylated alcohols, ethoxylated/propoxylated block polymers and ethoxylated sorbitan or sugar. One particularly preferred surfactant is commercially available from Union Carbide under the name Triton X-100, an ethoxylated octyl phenol.

As is known in the art, useful anti-foam agents are polydimethylsiloxanes and polydimethyl/diphenylsiloxanes copolymers.

In order to prepare the compositions of the present invention, the individual components are generally mixed by first adding the tebuconazole and then adding in order, the alkali metal sulfosuccinate, the nonionic surfactant, the diluent and the antifoam agent.

In the practice of the invention, the compositions are typically applied at rates of from about 20 to about 300 grams of active ingredient (A.I.) per hectare, preferably from about 60 to about 250 gram per hectare in accordance with techniques that are known in the art.

The compositions of the present invention are particularly effective in the control of powdery mildew on turf and grains, grapes and other crops, late leaf spot, peanut rust, dollar spot on turf, copper spot on turf, and various patch, blight and snow mold disease on turf.

Having thus described the invention the following Examples are given as being illustrative thereof. All parts and percentages given in these Examples are parts by weight and percentages by weight, unless otherwise indicated.

### Examples

### Examples 1-8

Tebuconazole, an alkali metal sulfosuccinate, water, propylene glycol, octyl phenol ethoxylate [Triton X-100] and dimethyl polysiloxane [Sag 10] from Osi Specialties were combined in the amounts indicated in Table 1. The resultant compositions were then each sprayed at a concentration of 63 g(A.I.)/hectare, 125 g(A.I.)/hectare and 250 g(A.I.)/hectare onto three leaf wheat plants in a greenhouse as a foliar spray using a conveying belt sprayer. The plants so treated were then evaluated for their effectiveness in controlling powdery mildew over a period of 28 days. The results are reported in Table 2. To arrive at the results reported, the effect was visually checked and rated at a number of from 0 to 100%. The visual checking/rating was repeated three times and the average of the three sightings were reported.

The alkali metal sulfosuccinates used in the Examples below were as follows:
SULFOSUCCINATE A: Sodium bis-tri-decyl sulfosuccinate anionic 70% liquid which is commercially available from American Cyanamid under the designation Aerosol TR-70.
SULFOSUCCINATE B: Sodium dioctyl sulfosuccinate in the form of an anionic 85% active powder which is commercially available under the designation Aerosol OT-B from American Cyanamid.
SULFOSUCCINATE C: Sodium dioctyl sulfosuccinate in the form of an anionic 100% wax which is commercially available under the designation Aerosol OT-100 from American Cyanamid.
SULFOSUCCINATE D: Sodium dioctyl sulfosuccinate in the form of an anionic 70% liquid in propylene glycol and water which is commercially available from American Cyanamid under the designation Aerosol OT-70PG.
SULFOSUCCINATE E: Sodium dihexyl sulfosuccinate in the form of an 80% anionic liquid which is commercially available from American Cyanamid under the designation Aerosol MA-80.
SULFOSUCCINATE F: Sodium dicyclohexyl sulfosuccinate in the form of anionic 85% pellets which is commercially available from American Cyanamid under the designation Aerosol A-196.
SULFOSUCCINATE G: Sodium diamyl sulfosuccinate in the form of an anionic waxy solid which is commercially available under the designation Aerosol AY-100 from American Cyanamid.
SULFOSUCCINATE H: Sodium diisobutyl sulfosuccinate in the form of a 45% anionic liquid which is commercially available from American Cyanamid under the designation Aerosol IB-45.

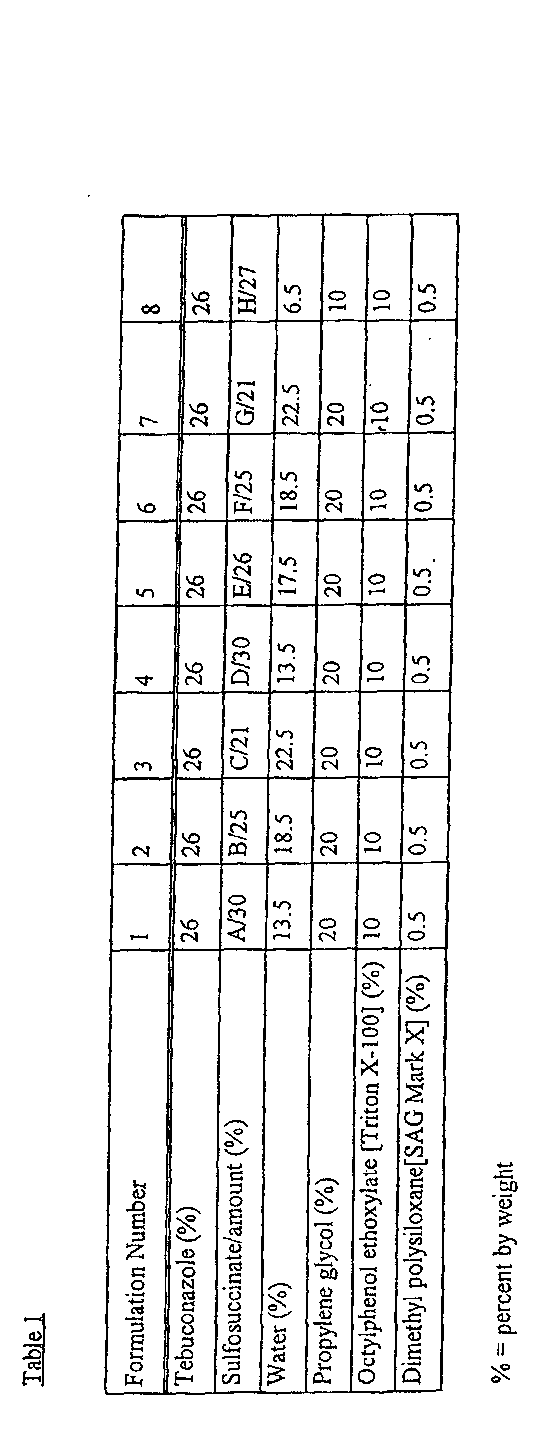

**Table 2**

| Formulation No. | Application Rate (g A.I./hectare) | % Control | |
|---|---|---|---|
| | | after 21 days | after 28 days |
| CONTROL | 0 | 0 | 0 |
| 1 | 62.5 | 21 | 3 |
| 1 | 125 | 46 | 15 |
| 1 | 250 | 92 | 51 |
| 2 | 62.5 | 31 | 3 |
| 2 | 125 | 54 | 38 |
| 2 | 250 | 95 | 77 |
| 3 | 62.5 | 74 | 33 |
| 3 | 125 | 94 | 64 |
| 3 | 250 | 99 | 92 |
| 4 | 62.5 | 26 | 8 |
| 4 | 125 | 76 | 31 |
| 4 | 250 | 100 | 97 |
| 5 | 62.5 | 81 | 62 |
| 5 | 125 | 95 | 77 |
| 5 | 250 | 99 | 94 |
| 6 | 62.5 | 54 | 31 |
| 6 | 125 | 92 | 67 |
| 6 | 250 | 94 | 85 |
| 7 | 62.5 | 67 | 31 |
| 7 | 125 | 94 | 69 |
| 7 | 250 | 95 | 86 |
| 8 | 62.5 | 72 | 33 |
| 8 | 125 | 72 | 33 |
| 8 | 250 | 94 | 78 |

## Claims

1. Fungicidal compositions in the form of suspensions, **characterized by** comprising
a) from 20 to 30% by weight of α-(2-(4-chlorophenyl)-ethyl)-α-(1,1-dimethylethyl)-1H-1,2,4-triazol-1-ethanol,
b) from 10 to 40% by weight of an alkali metal sulfosuccinate of the formula 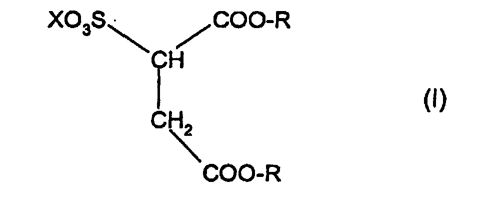 in which
R is tridecyl, octyl, hexyl, amyl, isobutyl or cyclohexyl and
X is a sodium atom,
c) from 15 to 45% by weight of an inert, liquid diluent,
d) from 8 to 12% by weight of a nonionic surfactant, and
e) from 0.5 to 1 % by weight of an anti-foam agent,
with said percents equalling 100%.

2. Process for the control of fungi on plants, **characterized in that** compositions according to claim 1 are applied to the fungi and/or to their habitat.

3. Process according to claim 2, **characterized in that** the compositions are applied to the plants by spraying.

4. Use of compositions according to claim 1 for the control of fungi on plants.

## Patentansprüche

1. Fungizide Zusammensetzungen in Form von Suspensionen, **dadurch gekennzeichnet, dass** sie folgendes umfassen:
a) 20 bis 30 Gew.-% α-(2-(4-Chlorphenyl)ethyl)-α-(1,1-dimethylethyl)-1H-1,2,4-triazol-1-ethanol;
b) 10 bis 40 Gew.-% eines Alkalimetallsulfosuccinats der Formel 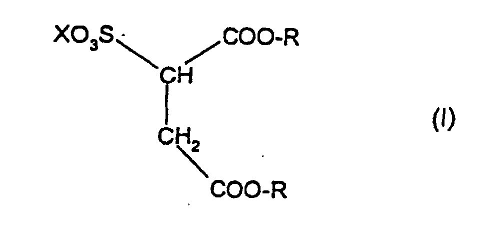 wobei
R Tridecyl, Octyl, Hexyl, Amyl, Isobutyl oder Cyclohexyl ist und
X ein Natriumatom ist;
c) 15 bis 45 Gew.-% eines inerten flüssigen Verdünnungsmittels;
d) 8 bis 12 Gew.-% einen nichtionischen Tensids; und
e) 0,5 bis 1 Gew.-% eines Schaumverhütungsmittels;
wobei die Summe dieser Prozentanteile 100% beträgt.

2. Verfahren zur Bekämpfung von Pilzen auf Pflanzen, **dadurch gekennzeichnet, dass** Zusammensetzungen gemäß Anspruch 1 auf die Pilze und/oder ihren Lebensraum aufgetragen werden.

3. Verfahren gemäß Anspruch 2, **dadurch gekennzeichnet, dass** die Zusammensetzungen durch Sprühen auf die Pflanzen aufgetragen werden.

4. Verwendung von Zusammensetzungen gemäß Anspruch 1 zur Bekämpfung von Pilzen auf Pflanzen.

## Revendications

1. Compositions fongicides sous forme de suspensions, **caractérisées par** le fait de comprendre
a) de 20 à 30% en poids de α-(2-(4-chlorophényl)éthyl)-α-(1,1-diméthyléthyl)-1H-1,2,4-triazol-1-éthanol,
b) de 10 à 40% en poids d'un sulfosuccinate de métal alcalin de formule 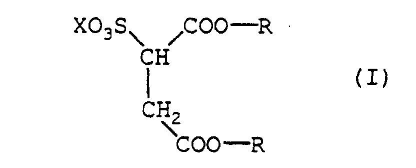 dans laquelle
R est un tridécyle, un octyle, un hexyle, un amyle, un i-butyle ou un cyclohexyle et
X est un atome de sodium,
c) de 15 à 45% en poids d'un diluant inerte, liquide,
d) de 8 à 12% en poids d'un tensioactif non-ionique, et
e) de 0,5 à 1% en poids d'un agent anti-mousse,
lesdits pourcentages atteignant 100%.

2. Procédé pour le contrôle de champignons sur des plantes, **caractérisé en ce que** des compositions suivant la revendication 1 sont appliquées sur les champignons et/ou sur leur habitat.

3. Procédé suivant la revendication 2, **caractérisé en ce que** les compositions sont appliquées sur les plantes par pulvérisation.

4. Utilisation des compositions suivant la revendication 1, pour le contrôle de champignons sur des plantes.
